# EUROPEAN PATENT SPECIFICATION

(11) **EP 3 468 307 B1**
(45) Date of publication and mention of the grant of the patent: **30.11.2022**
(21) Application number: 18199468.2
(22) Date of filing: 09.10.2018
(51) Int. Cl.: H05B 47/10, H05B 47/185, H04B 3/54

(54) **TWO-WIRE LOAD CONTROL SYSTEM EXTENSION**
ERWEITERUNG EINES ZWEIADRIGEN LASTREGELUNGSSYSTEMS
EXTENSION DE SYSTÈME DE COMMANDE DE CHARGE À DEUX FILS

(30) Priority: 09.10.2017 BE 201705724
(43) Date of publication of application: 10.04.2019
(73) Proprietor: Niko NV, 9100 Sint-Niklaas (BE)
(72) Inventor: DE BRABANDER, Peter, 9100 Nieuwkerken Waas (BE); ROMBAUTS, Geert, 2018 Antwerpen (BE)
(74) Representative: DenK iP bv

(56) References cited:
- EP-B1- 2 033 495
- US-A1- 2004 207 343
- US-A1- 2008 258 882
- US-A1- 2009 206 769
- US-B2- 7 872 377
- US-B2- 8 242 708

## Description

### Field of the invention

The present invention relates to smart load control systems that control the amount of power delivered thereto via smart control devices installed at multiple locations. More particularly, the present invention relates to a load control system for controlling the amount of power delivered to an electrical load, such as a smart light dimming system that controls the amount of power delivered to a lighting device in several locations by providing a dimmer device and one or more smart remote extension devices that are operable to communicate with the dimmer device.

### Background of the invention

It is common in electrical installations, for instance the electrical wiring in residential buildings, to use interconnected electrical switches to control a load, in many cases a lighting device, from several distinct locations. Well-known examples are two in series connected, but distant single-pole-double-throw (SPDT) light switches either of which can be operated, e.g. upstairs and downstairs in a staircase, so as to turn the lighting device on or off. By inserting one or more intermediate double-pole-double-throw (DPDT) switches in between the two SPDT light switches it is possible to control the lighting device from even more than two locations. In the field of load control systems, especially for lighting applications, it is common practice to use dimmer devices to regulate the amount of power delivered to the load, for instance to regulate the brightness of a LED or other sorts of light sources. In many electrical installations it is desirable to combine a switch and a dimmer into a single device that can be wall-mountable and to dispose of similar second devices placed at multiple remote locations, so as to switch and/or dim a load, e.g. a lighting device, from more than just a single location. For such purposes it is insufficient to serially connect two dimmer devices as synchronization between them is required. In this respect US patent US 8242708 B2 (Steiner [US] et al.) describes the serial coupling of one smart main load control device and one or more remote smart load control devices in which the smart remote load control devices communicate with the main load control device by transmitting and receiving digital messages via a communication path and in which all the smart load control devices are provided with actuators operated by the user. The remote smart load control devices, however, need three wire connections in an electrical installation and it would save material and installation costs if the number of wire connections to remote devices could be decreased. It also discloses that the exchange of information and the charging of active remote circuitry happens for every half-cycle of an AC voltage signal provided by an AC power source coupled to the load control system. As a consequence this limits the available amount of power deliverable to the load which is narrowing the available dimming range.

US 2004/207343 describes a dimmer control system with tandem power supplies. The dimmer control system has a communication control loop that connects a master unit in series with a 5 plurality of remote units. US 2009/206769 describes a load control device or controlling an amount of power delivered to an electrical load using a rotary actuator. EP 2033495 describes dimming system comprising a plurality of dimmers coupled between an AC power source and a lighting load. US7872377 describes a system allowing communications between switches in an electrical circuit containing 3-wayand 4-way switches. US20080258882A1 relates to circuits and methods for transmission of digital data between two or more devices via powerline.

### Summary of the invention

It is an object of embodiments of the present invention to provide good systems and methods for controlling an electrical load.

The above objective is accomplished by a load control system as defined in claim 1. Further embodiments are defined in the dependent claims.

Such a load control system comprises:
a main load control device connected in series connection between an AC power source and an electrical load, the main load control device providing means for controlling the amount of electrical current flowing from the AC power source through the electrical load, and the main load control device being adapted to receive external, electrically signaled messages during a first fraction of a half-cycle of a voltage signal provided by the AC power source; and
one or more remote extension devices, each of the one or more remote extension devices having not more than two external electrical connection terminals and each of the one or more remote extension devices being coupled in series connection between the AC power source and the electrical load via the main load control device and being remotely installed from the main load control device, the one or more remote extension devices each comprising means for transmitting electrically signaled messages along a communication path during a first fraction of a half-cycle of a voltage signal provided by the AC power source, and the remote extension devices comprising each an internal means for drawing, during a second fraction of a half-cycle of a voltage signal provided by the AC power source, the second fraction being different from the first fraction, an electrical charging current along a charging path that extends through at least the main load control device, the electrical charging current being suitable for supplying electrical power to at least the respective means for transmitting electrically signaled messages; and
wherein the communication path and the charging path use a single switched electrical connection between the main load control device to the remote extension device; and
wherein in response to at least one of the electrically signaled messages transmitted by one of the remote extension devices and received by the main load control device during a first fraction of a half-cycle of a voltage signal provided by the AC power source, the main load control device is adapting the amount of electrical current flowing from the AC power source through the electrical load.

The first fraction may be not overlapping with the second fraction.

The first fraction of a half-cycle of a voltage signal provided by the AC power source may be a fraction of the positive half-cycle of a voltage signal provided by the AC power source and the second fraction of a half-cycle of a voltage signal provided by the AC power source may be a fraction of the negative half-cycle of a voltage signal provided by the AC power source. The first and second fraction also may be interchanged.

The means for controlling the amount of electrical current flowing from the AC power source through the electrical load may comprise a switch, for example a bidirectional semiconductor switch.

The load control system may comprise a controller circuit that is adapted for switching the bidirectional semiconductor switch.

The controller circuit may comprise a microcontroller.

The system may further comprise a synchronization circuit that is adapted for accurately timing the switching of the bidirectional semiconductor switch by the controller circuit.

The load control system may use phase control to control the amount of power delivered to an electrical load.

The electrical charging current along a charging path may be drawn through at least the main load control device during the first and the second fraction of a half-cycle of a voltage signal provided by the AC power source, if no electrically signaled messages are transmitted by any of the remote extension devices.

The one or more remote extension devices may be adapted to receive external, electrically signaled messages during a first fraction of a half-cycle of a voltage signal provided by the AC power source and the main load control device provides means for transmitting electrically signaled messages along a communication path during a first fraction of a half-cycle of a voltage signal provided by the AC power source such that electrically signaled messages are transmitted and received by both the remote extension devices and the main load control device.

0ne or more main control load devices may be configured as extension device.

The remote extension devices may be rotary-knob dimmers.

The remote extension device may further comprise at least one pre-regulator circuit.

The main load control device may further comprise at least one filter circuit.

The main load control device may be adapted to receive external, electrically signaled messages across an isolating electrical element.

The isolating electrical element may be an optocoupler.

The load control system may further comprise a user control feedback mechanism.

The main control load device and/or remote extension devices may further comprise a switching means for selecting a mode wherein guaranteed no current is flowing through the load. The switching means may be an air-gap switch. In some embodiments, the switching means may be an on/off type switch with a physical air separation, which may for example be used during mounting of loads. The latter may be used to guarantee that no current is flowing through the load at all during for example replacement of a load. The main control load device and/or remote extension devices may in some embodiments comprise a push button or a toggle switch or a rocker switch.

The main load control device may further comprise a memory element.

The memory element may store user preferences for the controlled electrical load and/or preset functions of the controlled electrical load.

The load control system may further comprise actuators for transducing the user control inputs into electrically signaled messages.

The electrically signaled messages may be digital messages using Manchester encoding or universal asynchronic receiving transmitting (UART) protocol.

The first and second fraction of a half-cycle of a voltage signal provided by the AC power source may be dynamically adjustable in time as a function of the amount power delivered to the electrical load.

A remote load control extension device, of a load control system according to embodiments of the present invention, for controlling the amount of power delivered to an electrical load from a second position different from a first position from which the amount of power delivered to an electrical load can also be controlled, comprises not more than two external electrical connection terminals, and is adapted for being coupled in series connection between the AC power source and the electrical load via the main load control device,
the remote load control extension device furthermore comprises a means for transmitting electrically signaled messages along a communication path during a first fraction of a half-cycle of a voltage signal provided by the AC power source the electrically signaled messages being for controlling the amount of electrical current flowing from the AC power source through the electrical load, and the remote load control extension device comprises an internal means for drawing, during a second fraction of a half-cycle of a voltage signal provided by the AC power source, the second fraction being different from the first fraction, an electrical charging current along a charging path that extends through the main load control device, the electrical charging current being suitable for supplying electrical power to at least the respective means for transmitting electrically signaled messages;
wherein the remote load control extension device comprises a single port for establishing the communication path and the charging path via a single switched electrical connection between the main load control device to the remote extension device.

The first fraction may be not overlapping with the second fraction.

The above and other aspects of the invention will be apparent from and elucidated with reference to the embodiment(s) described hereinafter.

### Brief description of the drawings

The invention will now be described further, by way of example, with reference to the accompanying drawings, in which:

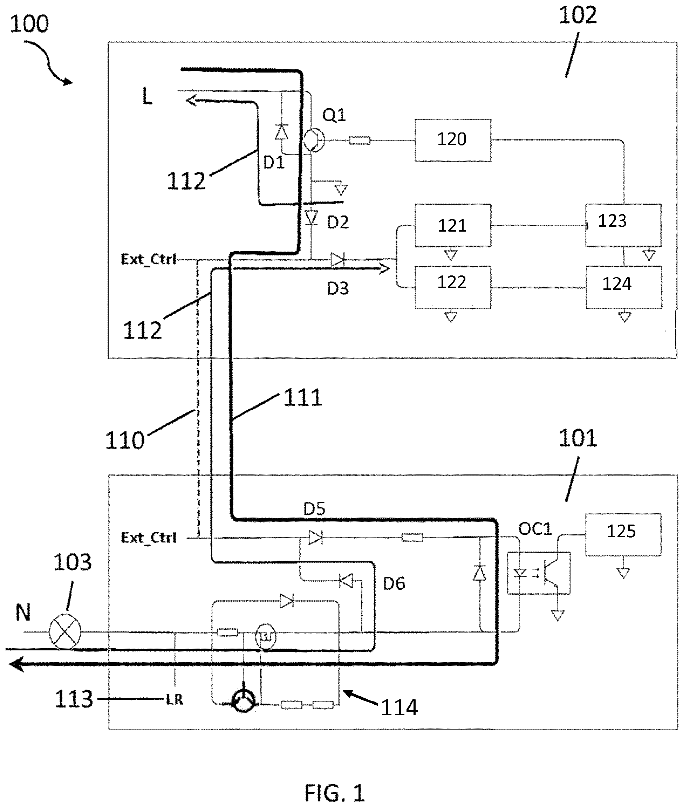

Fig. 1 shows a block diagram of the load control system and the communication and charging path therein, according to an embodiment of the present invention.

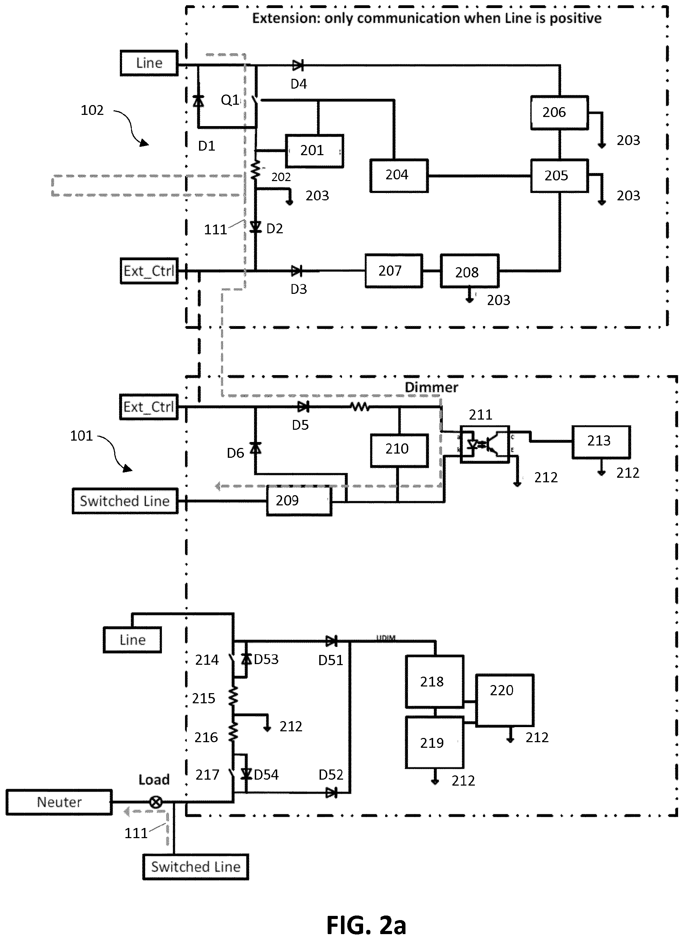

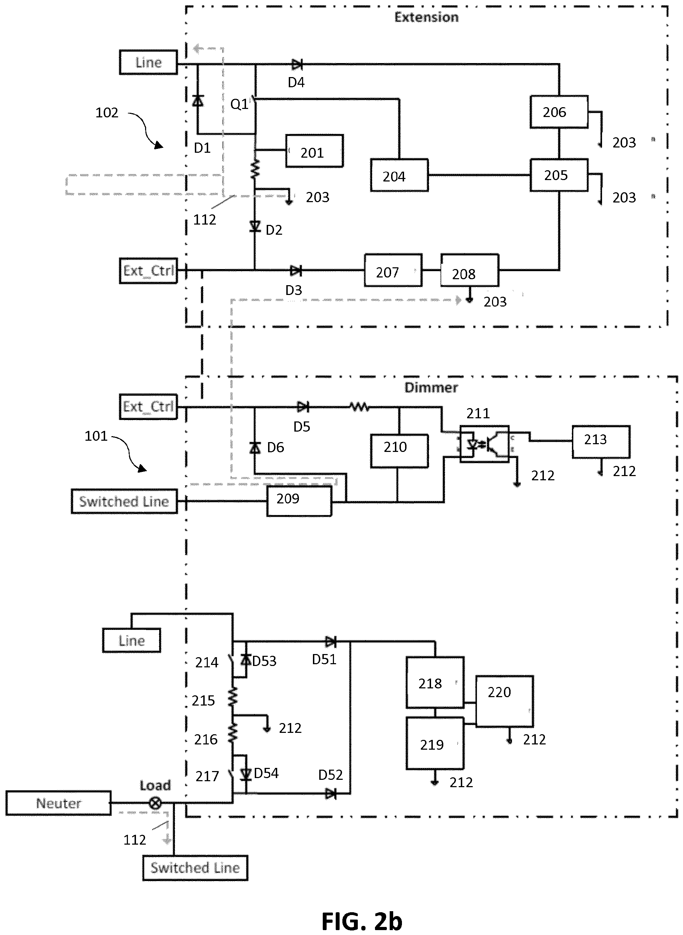

Fig. 2a and FIG. 2b illustrate the communication path respectively the power path for a load control system as shown in FIG. 1, according to an embodiment of the present invention.

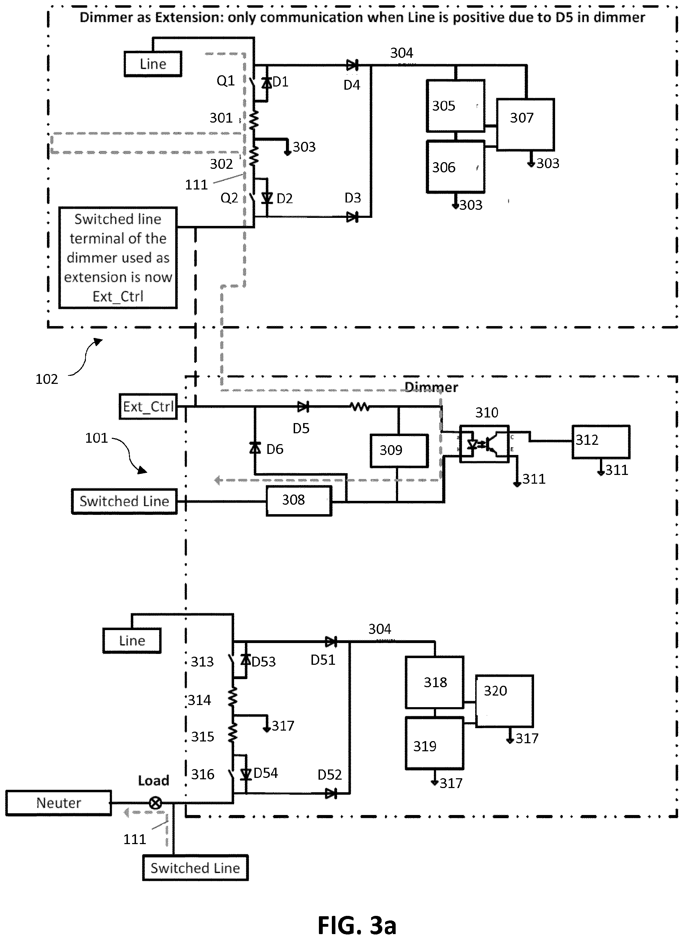

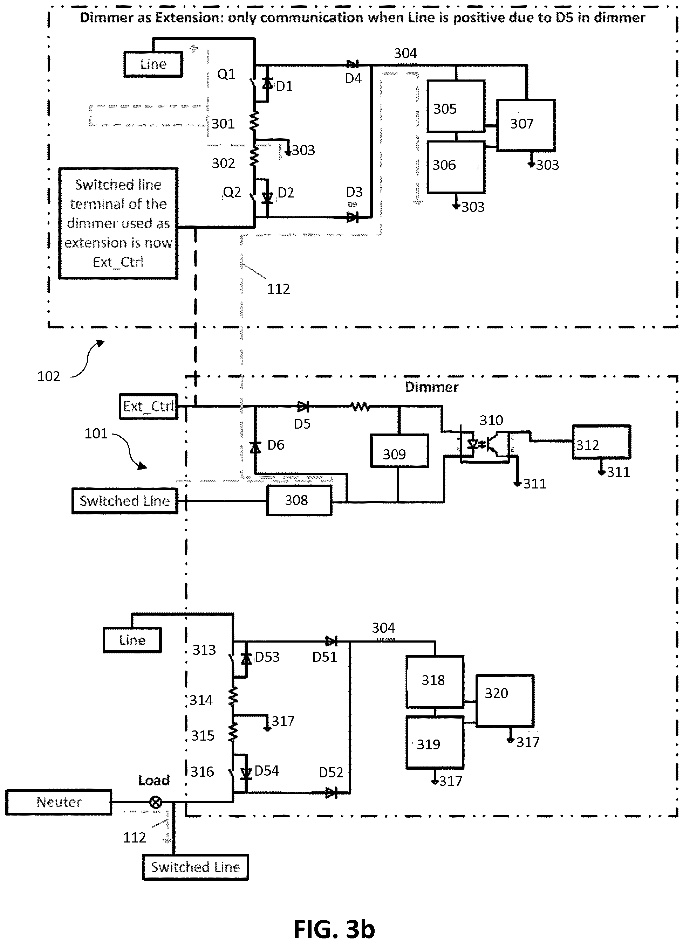

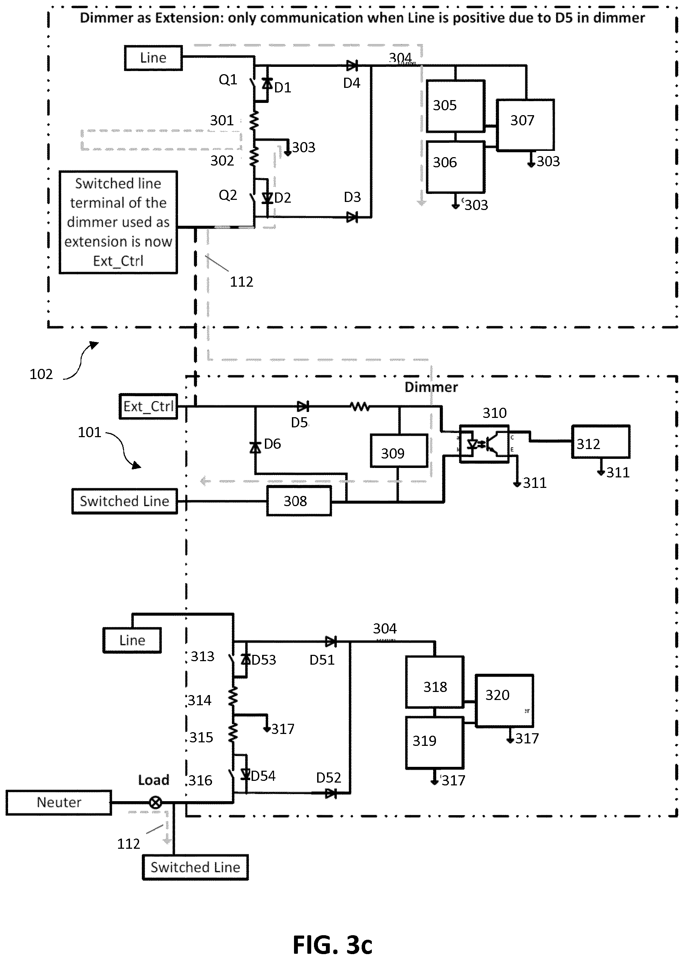

FIG. 3a, FIG. 3b and FIG. 3b illustrate a block diagram of a load control system wherein a dimmer is configured as extension device, whereby in FIG. 3a the communication path is illustrated and in FIG. 3b and FIG. 3c the power path is shown respectively during the negative and positive half of the signal.

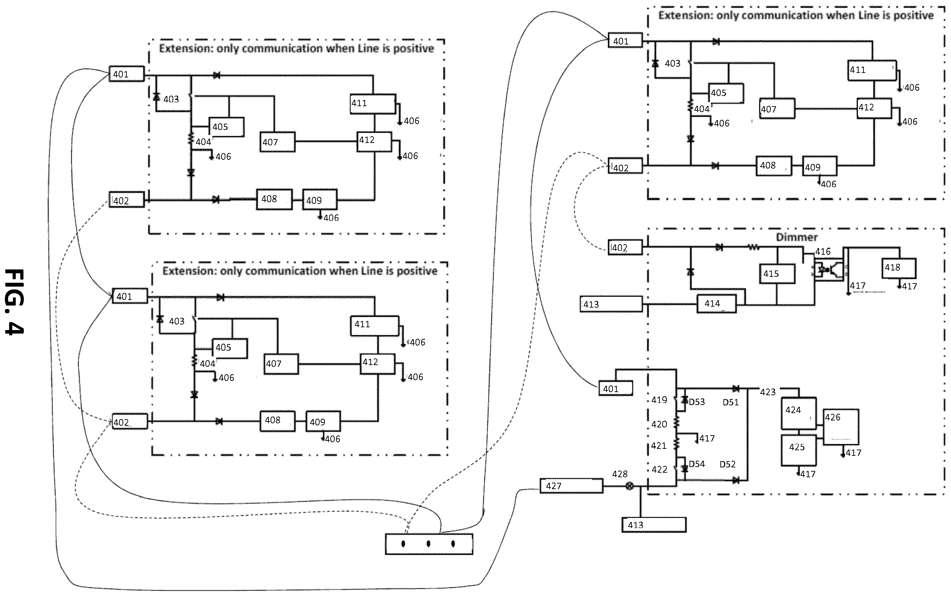

FIG. 4 illustrates an implementation of a system with multiple two-wire extension devices according to an embodiment of the present invention.

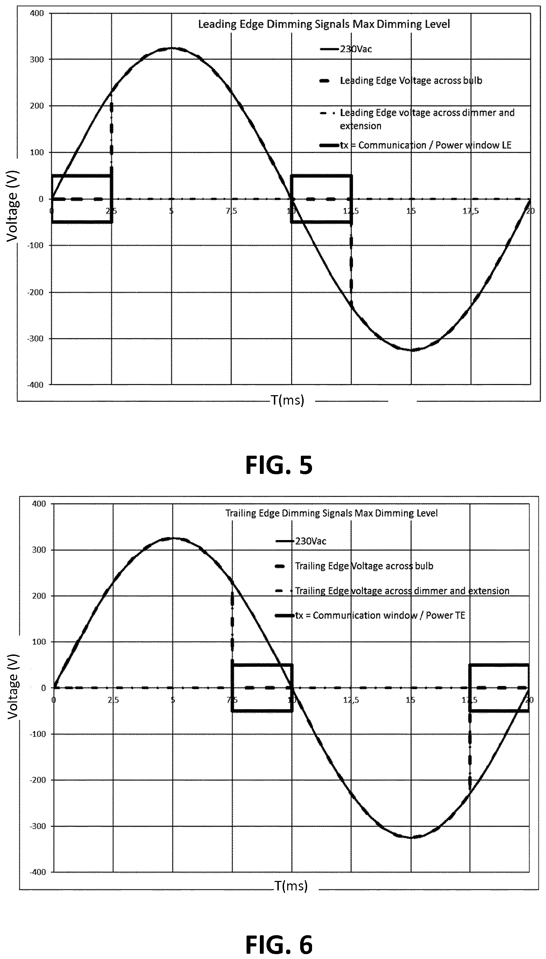

Fig. 5 displays a graph reporting the evolution of the provided AC voltage signal, the voltage across the load, the voltage across the dimmer device, and the voltage levels of the communication and charging paths over a complete cycle with phase control at the leading edges and a conduction phase angle of 7.5 ms.
Fig. 6 displays a graph reporting the evolution of the provided AC voltage signal, the voltage across the load, the voltage across the dimmer device, and the voltage levels of the communication and charging paths over a complete cycle with phase control at the trailing edges and a conduction phase angle of 7.5 ms.

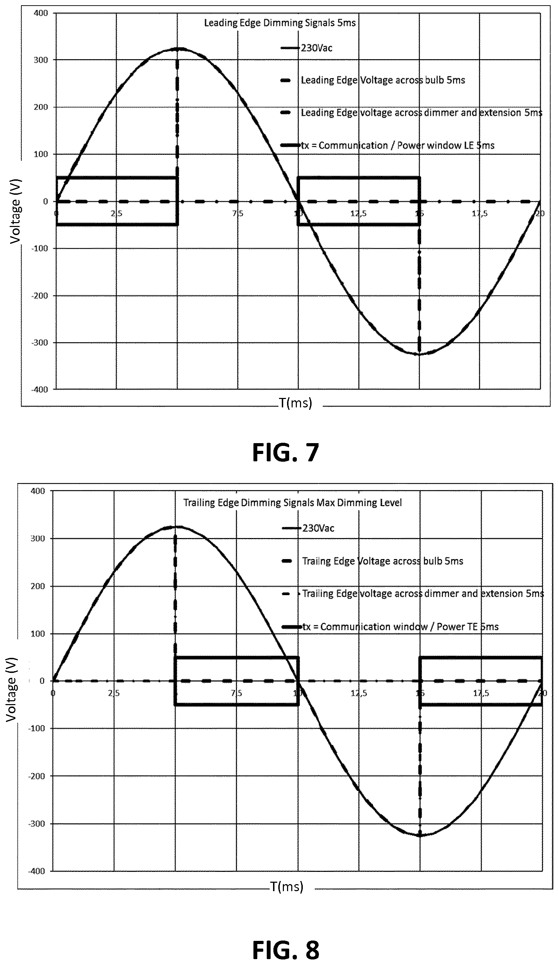

Fig. 7 displays a graph reporting the evolution of the provided AC voltage signal, the voltage across the load, the voltage across the dimmer device, and the voltage levels of the communication and charging paths over a complete cycle with phase control at the leading edges and a conduction phase angle of 5 ms.
Fig. 8 displays a graph reporting the evolution of the provided AC voltage signal, the voltage across the load, the voltage across the dimmer device, and the voltage levels of the communication and charging paths over a complete cycle with phase control at the trailing edges and a conduction phase angle of 5 ms.

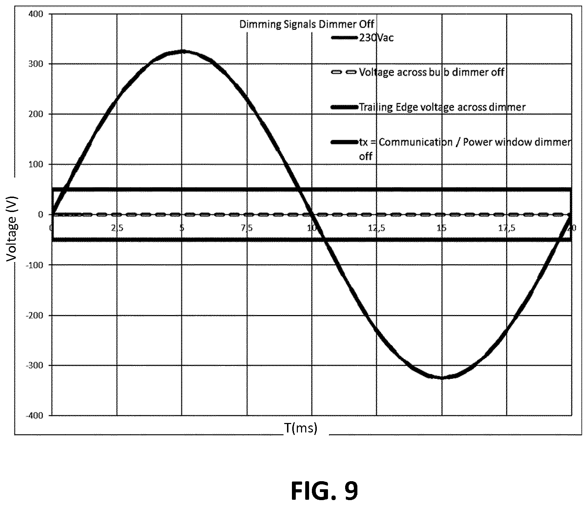

Fig. 9 displays a graph reporting the evolution of the provided AC voltage signal, the voltage across the load, the voltage across the dimmer device, and the voltage levels of the communication and charging paths over a complete cycle for the case of a completely dimmed load.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims.

It should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect the present invention relates to a load control system for controlling the amount of power delivered to an electrical load. The system thereby is especially suitable for allowing control of the amount of power delivered to an electrical load from more than one position, e.g. for dimming a lighting device from different positions in a house. The load control system comprises a main load control device connected in series connection between an AC power source and an electrical load, the main load control device providing means for controlling the amount of electrical current flowing from the AC power source through the electrical load. According to embodiments of the present invention, the main load control device also is adapted to receive external, electrically signaled messages during a first fraction of a half-cycle of a voltage signal provided by the AC power source.

The load control system also comprises one or more remote extension devices, which may also be referred to as remote load control extension devices, each of the one or more remote extension devices having not more than two external electrical connection terminals. The system thus needs to be adapted for both powering of the remote extension devices as well as allowing control by the remote extension devices through these wires. Each of the one or more remote extension devices is being coupled in series connection between the AC power source and the electrical load via the main load control device and is remotely installed from the main load control device. The one or more remote extension devices each comprise means for transmitting electrically signaled messages along a communication path during a first fraction of a half-cycle of a voltage signal provided by the AC power source, and the remote extension devices each comprise an internal means for drawing an electrical charging current along a charging path that extends through the main load control device, the electrical charging current being suitable for during a second fraction of a half-cycle of a voltage signal provided by the AC power source supplying electrical power to at least the respective means for transmitting electrically signaled messages. According to embodiments of the present invention, the communication path and the charging path use a single switched electrical connection between the main load control device to the remote extension device.

The second fraction is different from the first fraction. The first fraction may be not overlapping with the second fraction.

In response to at least one of the electrically signaled messages transmitted by one of the remote extension devices and received by the main load control device during a first fraction of a half-cycle of a voltage signal provided by the AC power source, the main load control device is adapting the amount of electrical current flowing from the AC power source through the electrical load. In some embodiments, the first fraction of a half-cycle of a voltage signal provided by the AC power source is a fraction of the positive half-cycle of a voltage signal provided by the AC power source and the second fraction of a half-cycle of a voltage signal provided by the AC power source is a fraction of the negative half-cycle of a voltage signal provided by the AC power source. The first fraction and the second fraction may also be interswitched.

Further features and advantages will become apparent from the description of the below embodiments and examples, illustrated with reference to the different drawings.

Fig. 1 shows a schematic block diagram of the load control system 100, e.g. a lighting device control systems, operable from two distinct locations. It comprises the main load control device 101, which may be a dimmer, and an extension load control device 102 thereto, which may be a dimmer too, e.g. a rotary dimmer. According to an embodiment of the invention the electrical wire connection Ext_Ctrl 110, connecting the main load control device 101 and the extension device 102 may serve both as communication path and as charging path as described in the following. A load 103 is controlled by the main load control device 101 which is accurately setting the phase angle of a phase control modulator. Hence it is possible to control the gate of a semiconductor switch, e.g. a triac, two FETs in anti-series connection, or an insulated-gate bipolar junction transistor, which is toggled from a non-conductive state to a conductive state at a tunable time delay after the zero-phase crossing of the AC voltage signal provided by the AC power source. Therefore only a fraction of each half-cycle is relayed, e.g. via a switched line LR 113, to the load 103 thereby regulating the amount of power delivered thereto. Detection of the zero-phase crossing may be implemented as part of a synchronization circuit SYNC which is signaling the occurrence of zero-phase crossings to the controller circuit, e.g. to µC Extension. Alternatively, instead of cutting a portion of the leading edge of the AC voltage signal, a portion of the trailing edge may be cut, which may be advantageous if capacitive loads instead of resistive or inductive loads are installed.

In operation, the load control system 100 may have the extension device 102 electrically coupled in series between an AC power source via an electrical line L and the main device 101 via an additional wire connection Ext_Ctrl 110, and may have the main control device 101 coupled in series to the controlled load 103, e.g. a lighting device, which is connected back to the AC power source. This wire connection Ext_Ctrl 110 establishes both a communication and a charging path, 111 and 112, respectively, between the main load control device 101 and the extension device 102 depending on the polarity of the AC voltage signal provided to the input of the extension device 102 via the electrical line L. It is an advantage of embodiments of the invention that only two wires are necessary to connect the remotely installed extension device 102 to the main load control device 101 without losing the functionality of the remotely installed extension device 102 to act as a dimming control.

During a fraction of a positive half-cycle of the AC voltage signal provided by the AC power source, the electrical line L has a positive potential at the input side of the extension device 102 and a current flows into it, if the switch Q1, which may be a bipolar transistor, is open. This switch Q1 is operated by a driving circuit, DRIVE, which in turn is controlled by a controller circuit µC Extension of the extension device 102, which may be a microcontroller, programmable logic device, ASIC, or other appropriate device as it occurs to a person skilled in the art. Therefore the controller circuit µC Extension is used to encode a message, that may be a digital message, encoded for instance by the Manchester coding scheme or universal asynchronic receiving transmitting (UART) protocol, by timing the toggling events of the switch Q1 in response to an actuator event triggered by the user, e.g. lowering or increasing the amount of power delivered to the load 103, e.g. lowering or increasing the brightness of a lighting device. The digital message is transmitted to and received by the main load control device 101 following the communication path 111. A current flow representing the digital message is thereby passing the diode D2 and is directed to the main load control device 101 via the wire connection Ext_Ctrl 110. Within the main load control device 101 this current continues on the communication path 111 by first passing the diode D5, traversing the coupling element OC1 and the serially connected controlled load 103, e.g. a lighting device, and returning to the AC power source via an electrical line N provided to the load 103. It may be necessary to limit the maximum amount of current of flowing along the communication path 111 and traversing the controlled load 103, for instance a lamp, so as to avoid unwanted flickering or low intensity glowing of the lamp. This may be achieved by a current limiting circuit 114 placed into the communication pathway 111. The coupling element OC1 may be an optocoupler and is used to isolate sensitive, e.g. low-voltage devices and circuits, from the higher voltage, energized parts of the main load control device 101, for instance circuit parts of the main load control device 101 associated with the communication path 111. A converted part of the transmitted message is output by the coupling element OC1 and provided to a controller circuit, µC Dimmer, of the main load control device 101, which also may be a microcontroller. The controller circuit µC Dimmer may comprise a receiver circuitry that receives and decodes the transmitted message sent by the extension device 102. As a result thereof the controller circuit µC Dimmer adjusts the phase angle of the phase control modulator so as to reflect the user input transduced by the respective actuator. Possible choices of actuators may include on/off switches, rotary knobs for dimmers, touch panels, push buttons, etc.; the actuators may be supplemented by user-friendly visual or audio feedback information about the current settings, for instance status lamps, LED displays or display bars, audio signal generators.

In contrast, no current flows into the extension device 102 along the communication path 111 if the switch Q1 is closed or during a negative half-cycle of the AC voltage signal, since the diode D2 is blocking in this configuration.

Since the extension device 102 is not equipped with an extra wire connection to the electrical neutral line N, it is not powered separately but requires drawing its supply power through the main load control device 101. This has the advantage of saving an additional wire connection, saves material and costs, and simplifies the electrical installation. As a consequence thereof, the two-wire extension device 102 needs to be charged repeatedly via a charging path 112; the capacitively stored charge is converted into a supply voltage, e.g. a 12V DC voltage or a DC voltage solely determined by the capacitance value of a storage capacitor and by the current limiting of a pre-regulator circuit as a function of the peak voltage value of the electrical mains, by a power supply unit, PSU, which may be an AC-DC converter, powering lower power circuit parts and devices comprised in the extension device 102. It may be advantageous to create multiple supply voltages for different circuit parts, for instance by providing an additional low-dropout voltage supply circuit LDO, e.g. at 3V DC voltage levels, which powers the sensitive controller circuit µC Extension and further protects it by isolation.

In embodiments of the invention according to Fig. 1, the charging path 112 is open during a fraction of the negative half-cycles for which the switched line LR 113 is not energized. In this case a charging current flows along the charging path 112 entering the main load control device 101 and being passed by the diode D6. Because of the presence of the diode D5, which is blocking in this configuration, there is not any current flowing through the coupling element OC1 therefore preventing false messaging within the controller circuit µC Dimmer of the main load control device 101. The charging current is then relayed to the extension device 102 via the wire connection Ext_Ctrl 110, passes the diode D3, which prevents the stored charge to be discharged subsequently, and charges storage capacitors that are part of the power supply unit PSU of the extension device 102. Simultaneously the charging path 112 connects to and powers the synchronization circuit SYNC. Exceeding charges of the charging current is leaving the extension device 102 along the diode D1. As for the currents participating in the communication phase being limited where it appears suitable, the charging currents may be current limited as well aiming at reducing the undesired current flow through the load 103. This current limit may be different from the current limit employed during communication.

In embodiments according to Fig. 1 it is also possible to replenish the charge storing devices of the power supply circuitry of the extension device 102 during the positive half-cycles provided that the switch Q1 is open. This implies that even within the communication phase, if the switch Q1 is open by default, and no message is transmitted, the power supply circuitry may be provided with power. This has the advantage that powering of the active circuitry of the extension device 102 is feasible for both positive and negative half-cycles of the AC voltage signal in the absence of communication events, and therefore the charging currents, flowing through the load 103, may be limited even more significantly.

Reference is now made to Fig. 2a to Fig. 2b that illustrate the communication path and powering path for an exemplary embodiment of the invention in a more detailed way compared to what has been shown in Fig. 1. The extension device 102 is shown in Fig. 2a comprising the same building blocks as in Fig. 1, whereby the communication path is illustrated. It is demonstrated in Fig. 2a that the current flow along the communication path 111, in the event of a message being transmitted, passes through a sensing element, which may be a sensing ohmic resistor Rsense. The sensing element represents the amount of current flowing through it, e.g. via an induced voltage drop along its terminals. This sensed information is influencing the action of a current limiting circuit, e.g. via a bipolar transistor that interacts with the electronic switch Q1 in such a way that the communication path limits its maximum current rating, e.g. by lowering the base current of a bipolar transistor. It is recommendable to implement switches Q1 with low parasitic capacitances to reduce false triggering events in the receiving circuit of the main load control device 101 due to induced currents originating from the parasitic capacitances. Additionally the extension device 102 may comprise a pre-regulator circuit, e.g. silicon controlled rectifiers, preceding the power supply units PSU. This may be important if a wider range of AC input signals need to be covered by the extension device 102.

Fig. 2a also shows a possible current limiting circuit that may be placed inside the main load control device 101, e.g. a dimmer, in order to limit the maximum current rating related to currents that leave the main load control device 101 on the load-sided wire connection, Switched Line, during communication or charging periods and traverse the load 103. A filtering circuit, e.g. a resistor or an inductor, e.g. a choke, may be coupled in parallel to the coupling element OC1, which may be an opto-coupler, digital isolator, capacitive coupler, or transformer, but is not limited thereto. This has the advantage that aforementioned capacitive coupling effects due to parasitic capacitances or due to capacitively coupled, long pairs of cables do not lead to false triggering events in the receiving circuitry, e.g. triggering of an opto-coupler, of the main load control device 101 or at least mitigates them. The use of the coupler element OC1 is providing additional isolation between the different electrical circuits of the main load control device 101, in particular it makes isolation with the dimmer circuit µC Dimmer. This leads for instance to less signal interference between dimmer and extension circuit.

Fig. 2a also illustrates another part of the main load control device 101indicating how the communication path 111 is connected to the load-sided terminal of the main load control device 101 via the electrical wire connection, Switched Line, and injects current into the load 103 connected in series with the electrical wire N that is the return path to a coupled AC power source. Hence it is important to control the amount of current and the time it is emanating from the line 'Switched Line', e.g. by adapting the communication and charging window in terms of phase angles and the use of current limiting circuits 114 as mentioned beforehand. Fig. 2a further illustrates a full-bridge rectifying circuit comprising the two diodes D51 and D52, D53 and D54 that each pass a half-cycle of the AC voltage signal provided by the AC power source. This half-bridge rectifying circuit may be used to energize a controller circuit, e.g. the dimmer electronics, e.g. a microcontroller µC dimmer 125, via suitable choices of pre-regulator 207 and power supply units 208.

As shown in Fig. 2a two instances of parallelly coupled diode-switch pairs, D53/SW1 214, and D54/SW2 217, respectively, connected in series, may be provided as a bidirectional semiconductor switch that relays the line-sided terminal 'Line' to the load-sided terminal 'N' of the main load control device 101. This bidirectional switch is operated by the controller circuit, e.g. a microcontroller µC dimmer 125, so as to allow the main load device to function as a dimmer, for instance to dim a lighting device in a controlled fashion.

During a positive half-cycle of the AC voltage signal provided to the 'Line' terminal of the main load control device 101 the switch SW1 215 is made conductive in response to a signal from the controller circuit, e.g. the dimmer electronic circuits may toggle the switch SW1 214 to a conductive state at a precise timing, e.g. 2.5 ms after a zero-phase crossing occurred, thus terminating the communication period that takes place during the leading edge, e.g. the first 2.5 ms, of the positive half-cycle. In alternative embodiments, the electronic circuits of the main load control device 101 and the extension device 102 may be configured such that the communication period starts within the trailing edge of positive half-cycle of the AC voltage signal, e.g. 2.5 ms before the zero-phase crossing, and the charging period also starts within the trailing edge of the AC voltage signal, e.g. 2.5 ms before the zero-phase crossing, but for a negative half-cycle.

FIG. 2b illustrates the corresponding powering path for the load system shown in FIG. 2a.

It is also possible that the communication period and charging period are interchanged, that is the charging period happens during a fraction of a positive half-cycle and the communication period happens during a fraction of a negative half-cycle. In still another embodiment, the communication and charging period may be adapted dynamically as a function of the dimming level, e.g. may range between 0 ms to 5 ms, e.g. between 0 ms and 2.5 ms, or the charging takes place during both positive and negative half-cycles if no message is exchanged, i.e. no communication is required. Moreover Fig. 2a and Fig. 2b show that sensing elements Rsensel, Rsense2 may be implemented that keep track of the switched load currents. The controller circuit, e.g. the dimmer electronics, may then detect changes in the load currents, e.g. disturbances in the AC power signal provided by the source or due to electromagnetic interferences, and compensate for it by influencing the two switches SW1 214 and SW2 217. Alternatively the load current sensing may be used to select between different switching or dimming modes that depend on a specific load type. This is advantageous if, for instance, different lighting devices are sought to be compatible with a designed dimming control system and for which different driving protocols are required, e.g. distinguishing between LED, incandescent, and halogen lamps.

In embodiments according to the invention additional switches may be provided, e.g. air-gap switches, that disconnect the entire main load control device 101 or its extension device 102 form the energized AC power line, so that the user may manipulate or change parts within the load control devices without any danger. Further it is possible to provide for visual or audio feedback by means of LED status bars, control lamps, or signal generators. This way the user may be informed about the current dimming level, a specific selected operation mode of the load control system 100, e.g. minimum or maximum dimming level reset modes or memory modes, etc. For this purpose the controller circuits of the load control system 100 may comprise a memory element that stores preferred user settings.

Fig. 3a to FIG. 3c show a communication path and power path of a load control system similar as shown in FIG. 1 to FIG. 2b, but wherein a dimmer device is configured to work as an extension device 102. This means that the main load control device 101 and its extension device 102 are similar or even the same dimming devices, but the second dimmer, is properly configured or set so as to effectively function as an extension device 102. Such an embodiment has the particular advantage that only a single hardware needs to be developed for both the main load control device 101 and the extension device 102 and merely the software configuration is set to function as main load control device 101 or extension device 102 accordingly. Referring to Fig. 3a to FIG. 3c, the diodes D3 and D4 are passing the charging currents of the cut leading or trailing edges of the negative and positive half-cycles of an AC voltage signal provided by an AC power source, respectively. These charging currents are used to load storage capacitances associated with the one or more power supply units PSU, which energize the controller circuitry µC Extension. More particularly, a cut leading or trailing edge of the negative half-cycle passes the diode D3, charges and energizes the electronics of the second main load control device working as an extension, e.g. the dimmer electronics comprising microcontroller and synchronization circuitry, and associated charging currents leave the second main load control device via the electrical line 'Line' after having passed the internal device ground, a sensing resistor, and the diode D1. This describes only the flow of charging current along a charging path 112 within the second main load control device working as an extension device. The missing part of the charging path 112 is accomplished by the charging currents associated to the cut leading or trailing edge of the negative half-cycle entering the main load control device 101 by the electrical line 'N', whereby the controlled electrical load 103 is traversed, continuing along the current limiting circuitry 114, passing the diode D6 and reaching the diode D3 of the second load control device acting as an extension via the Ext_Ctrl wire connection. In embodiments according to Fig. 2, it is preferable to configure the switched line 'LR' 113 of the second load control device acting as an extension to coincide with the Ext_Ctr wire connection terminal, thereby reducing the number of actively used terminals when the device is operational. If the second load control device, e.g. the second dimmer device, is configured as an extension device 102 care has to be taken to avoid unwanted triggering of the coupling element OC1, e.g. an opto-coupler, during a fraction of the positive half-cycle of the AC power signal leading to wrong messaging between the two connected devices 101, 102. This issue is due to the possibility of the creation of a current path along the following elements: electrical line 'Line' of the second load control device acting as an extension - diode D4 - PSU or synchronization circuitry or 'µC Extension' microcontroller circuitry - extension device 102 ground - sensing resistor - diode D2 - switched line 'LR' 113 configured as Ext_Ctrl - diode D5 of the main load control device 101 - coupling element OC1 - current limiting circuitry 114 of the main load control device 101 - switched line 'LR' of the main load control device 101 - electrical line 'N' terminal of the main load control device 101 thereby also traversing the controlled electrical load 103. This accidental current path susceptible to induce wrong signaling at the coupler element OC1 may be avoided by a properly designed filter for the coupler element OC1 or a an additional switching element placed in series with the diode D4 of the second load control device acting as an extension and configured so as to block current flow during a positive half-cycle. The zero-phase crossings of the leading or trailing edges of the AC voltage signal are detected by the synchronization circuit which is also coupled to the controller circuit µC Extension and serves as a reference for the precisely timed communication and charging windows during which the load is substantially unpowered. Semiconductor switches Q1, Q2, which may be bipolar junction transistors, are driven by a driving circuit, Drive, whose input is provided by signals sent by the controller circuit µC Extension. Simultaneous toggling the switches Q1, Q2 of the second load control device acting as an extension 102 from the on-state to the off-state and vice versa enables the transmission of an encoded message, which may be a digital message, that is directed to the load-sided wire connection, Ext_Ctrl. The communication path 111 within the main load control device 101 is identical to what has been described above in embodiments of the invention in connection to Fig. 1; in particular it is noted that the communication path is only active during a fraction of the positive half-cycle of the AC power signal. Furthermore, it is pointed out that the switch Q2 of the second main load control device acting as an extension 102, e.g. the second dimmer device acting as a dimmer extension device, is by default in an off-state or open position, if not toggled during a communication window, as otherwise charging currents during a fraction of the negative half-cycle may bypass the device's internal circuitry to be charged, e.g. the synchronization or microcontroller circuitry of the second load control device acting as an extension device 102, via a closed switch Q2 and diode D1, and leaving the extension device 102 at its 'Line' terminal.

By way of this example an embodiment of the invention has been described according to which the extension device 102 may just be a second main load control device, e.g. a second dimmer device, preceding or following the main load control device 101coupled in a load control system. Current limiting circuits 114 may be added to the extension device 102 acting as a dimmer to adjust the maximum current rating during a communication or charging step. This may be advantageous to improve safety and minimize undesirable currents flowing through the load during its substantially unpowered period.

Both the communication path and the power path respectively during the negative and the positive half of the signal is shown in FIG. 3a, FIG. 3b respectively FIG. 3c. It is to be noted that current limiting occurs for the communication path.

As shown in FIG. 3a to FIG. 3c, the dimmer typically comprises dimmer electronics, e.g. a microcontroller of the dimmer, which may comprise a synchronization circuit to determine the right window to send the data, a current limiting circuit, etc. The switches Q1 and Q2 advantageously have low parasitic capacitance since these capacitances have the same effect as long cables. The switch Q1 opens and closes as function of a communication status and the switch Q2 is always open when the dimmer is configured as extension. If this switch would not be open, any unused current can flow during the negative half sine and thus the current flowing during the negative half sine could not be used to foresee the device itself of power. During communication, the switches Q1 and Q2 are opened and closed at the same time.

With respect to powering, power is taken when switches Q1 and Q2are open during the positive half and the negative half. It is to be noted that taking power during the positive half of the sine is tricky because one needs to make sure that OC1 does not get triggered. The latter can be obtained by proper design, such as for example provide a proper filter for the optocoupler. Alternatively, using a switch it could also be designed that only power is taken via the negative half of the sine signal.

In alternative embodiments of the invention, a plurality of extension devices 102 as illustrated in Fig. 1, e.g. up to five extension devices, may be used simultaneously with and remotely installed from the main load control device 101. In such a particular alternative embodiment, the plurality of extension devices 102 are connected to each other, and with the AC power source and the controlled electrical load 103 via the main load control device 101. This may be achieved by connecting the electrical line L of a first extension device 102 to the electrical mains, i.e. the AC power source, and by also connecting it to the electrical line L of a second extension device. Additionally the Ext_Ctrl wire connection terminal of the first extension device is connected to the Ext_Ctrl wire connection terminal of the second extension device. Likewise, the electrical line L of the second extension device 102 is connected to the electrical line L of a third extension device and its Ext_Ctrl wire connection terminal is connected to the corresponding one of the third extension device, and so forth. Eventually the last extension device 102 of the plurality of extension devices has its electrical line L connected to that corresponding to the main load control device 101 and also has its Ext_Ctrl wire connection terminal connected to the one corresponding to the main load control device 101. Although the extension devices 102 are all coupled parallelly in such an alternative embodiment, the communication and charging path still extends through the main load control device 101, e.g. the dimmer device, and through the controlled electrical load 103. By way of illustration FIG. 4 illustrates an example of a system with three extensions. These only communicate at predetermined time periods. In FIG. 4, also a synchronization circuit is illustrated for the extensions, which is used for determining the right window to send the data. For switches Q1 it is advantageous that these have a low parasitic capacitance, since such capacitances have the same effect as using long cables. In the extension devices of FIG. 4, also a current limiting element is provided, allowing to sense the current e.g. via Rsense and allowing, e.g. via a bipolar transistor, to influence the switch to limit the current. In FIG. 4 it is also shown that in the main dimmer, a current limiting element may be present and a filtering element. The filtering element may for example be a resistor in parallel with the diode, in order to prevent false signals due to capacitive coupling. Furthermore the opto-coupler shown may alternatively be a digital insulator or a capacitive coupler or even a transformer. This element provides isolation to dimmer circuit, so that less interference occurs between the different signals, e.g. the dimmer and the extension.

Further, by way of illustration, embodiments of the present invention not being limited thereto, specific examples of time windows will now be discussed illustrating the timing of the different actions in more detail, thereby illustrating features and advantages of embodiments of the present invention.

Fig. 5 illustrates a time window for a 230 Vac voltage signal as provided by an 50 Hz AC power source coupled to the load control system 100. During a leading edge and up to a phase angle corresponding to 2.5 ms the bidirectional switch of the main load control device 101 or the extension device 102 acting as a dimmer is in its non-conducting state. Therefore the voltage across the load, e.g. a light bulb, is substantially zero, whereas the voltage across the main load control device 101 or extension device 102 is following the applied 230 Vac voltage signal and the its internal power supply units are charged such that a constant output voltage, e.g. voltage of the mains, is provided to the communication path 111, e.g. the voltage across the 'Line'-'Ext_Ctrl' connection, for activation of the communication window At a phase angle corresponding to 2.5 ms after the initial zero-phase crossing the bidirectional switch of the main load control device 101 or the extension device 102 acting as a dimmer is toggled into its conducting state and the energized 'Line' terminal is connected to the 'Switched Line' and as a consequence thereof no voltage drop occurs across the main load control device 101 or the extension device 102, e.g. the dimmer. However, the conductive switch now delivers the AC power to the load 103, hence substantially the entire 230 Vac supply voltage is applied across the load. No messages are transmitted by either the main load control device 101 or the extension device 102 and charging of the extension device 102 is inactive and the communication path 111/charging path 112 are substantially unenergized. At the zero-phase crossing at the end of the first positive half-cycle corresponding to a phase angle of 10 ms, the bidirectional switch of the main load control device 101 or the extension device 102 acting as a dimmer is toggled back into its non-conducting state. Therefore the voltage across the main load control device 101 or the extension device 102, e.g. the dimmer, is now following the leading edge of the first negative half-cycle of the 230 Vac voltage signal, whereas substantially no voltage drop occurs across the load 103 during the next 2.5 ms. However, the charging path 112 is energized during a time period tx so as to allow charge currents to flow from the main load control device 101 to the extension device 102 which is replenishing its internal power supply storage capacitances. The time period tx may be a variable subject to a dimmer setting from which it is determined. At a phase angle corresponding to 12.5 ms the bidirectional switch of the main load control device 101 provides substantially the full 230 Vac voltage signal to the load 103 and leaves the main load control device 101 or the extension device 102, e.g. the dimmer, as well as the communication path 111/charging path 112 unenergized. After 20 ms a full period of the 50 Hz source signal has lapsed and the process repeats starting with the second positive half-cycle, followed by the second negative half-cycle, and so on.

In Fig. 6 the same working principle as in Fig. 5 is illustrated except that the communication path 111 is energized at the trailing edge of the positive half-cycle, more particularly for phase angles ranging between 7.5 ms and 10 ms, and that the charging path 112 is energized at the trailing edge of the negative half-cycle, more particularly for phase angles ranging between 17.5 ms and 20 ms. This configuration may be preferable for capacitive loads 103.

In Fig. 7 the amount of power delivered to the load 103 is below its maximum value, e.g. the brightness of a light bulb is dimmed to some extent, such that the toggling into the conductive state of the bidirectional switch of the main load control device 101 occurs at phase angles that correspond to 5 ms and 15 ms, that is at the middle of each half-cycle. For such a particular embodiment the communication path 111 and the charging path 112 may be energized over an extended time period tx that may cover the entire leading edge of the corresponding half-cycles, e.g. a time period that lasts for 5 ms.

Fig. 8 illustrates the same dynamically adjusted time period during which communication and charging occur in their respective half-cycles. The only difference compared to Fig. 7 is that the entire trailing edge of each half-cycle is used to energize the communication path 111 and the charging path 112, respectively. Dynamical adjustment of the communication period or charging period tx is advantageous since lower currents may be provided in those cases and the load 103 is disturbed less. If the time periods are increased it may be an option to use redundant encoding so as to achieve error correction or to transmit more data, e.g. more bits of a digital message, during each communication period.

In Fig. 9 the case of a completely dimmed load 103 is shown, in which case the voltage across the load 103 stays substantially zero and the voltage across the dimmer device, e.g. the main load control device 101 or the extension device 102 acting as a dimmer, closely follows the provided 230 Vac voltage signal. In such a particular embodiment the charging and communication period tx may both cover the entire AC signal period of 20 ms so as to switch the load 103 back on as quickly as possible if the user operates the related commands.

A remote load control extension device, of a load control system according to embodiments of the present invention, is configured for controlling the amount of power delivered to an electrical load from a second position different from a first position from which the amount of power delivered to an electrical load can also be controlled. The remote load control extension device, of a load control system, according to embodiments of the present invention comprises not more than two external electrical connection terminals. The remote load control extension device is adapted for being coupled in series connection between the AC power source and the electrical load via the main load control device. The remote load control extension device furthermore comprises a means for transmitting electrically signaled messages along a communication path during a first fraction of a half-cycle of a voltage signal provided by the AC power source the electrically signaled messages being for controlling the amount of electrical current flowing from the AC power source through the electrical load. The remote load control extension device also comprises an internal means for drawing, during a second fraction of a half-cycle of a voltage signal provided by the AC power source, an electrical charging current along a charging path that extends through the main load control device. Such electrical charging current is being suitable for supplying electrical power to at least the respective means for transmitting electrically signaled messages. The remote load control extension device further comprises a single port for establishing the communication path and the charging path via a single switched electrical connection between the main load control device to the remote extension device. Further features and advantages may be as described in the first aspect of the present invention.

In the claims, the word "comprising" does not exclude other elements or steps, and the indefinite article "a" or "an" does not exclude a plurality. A single processor or other unit may fulfill the functions of several items recited in the claims.

### Reference numbers

- 120: drive
- 121: sync
- 122: PSU AC/DC (12VDC)
- 123: microcontroller (µC) Extension
- 124: LDO : 3VDC
- 125: microcontroller (µC) Dimmer
- 201: current limiting
- 202: Rsense
- 203: Ground extension
- 204: drive
- 205: microcontroller (µC) extension
- 206: synchronisation unit
- 207: pre-regulator
- 208: PSU
- 209: current limiting
- 210: filtering
- 211: OC1
- 212: ground dimmer
- 213: microcontroller Dimmer
- 214: SW1
- 215: Rsense1
- 216: Rsense2
- 217: SW2
- 218: Pre-regulator
- 219: power supply
- 220: dimmer electronics, e.g. µC dimmer
- 301: Rsense3
- 302: Rsense4
- 303: Ground Extension
- 304: UDIM
- 305: pre-regulator
- 306: power supply
- 307: dimmer electronics, e.g. µC dimmer
- 308: current limiting
- 309: filtering
- 310: OC1
- 311: ground dimmer
- 312: µC Dimmer
- 313: SW1
- 314: Rsense1
- 315: Rsense2
- 316: SW2
- 317: ground dimmer
- 318: pre-regulator
- 319: power supply
- 320: dimmer electronics, e.g. µC dimmer
- 401: line
- 402: ext_ctrl
- 403: Q1
- 404: Rsense
- 405: Current limiting
- 406: ground extension
- 407: drive
- 408: pre-regulator
- 409: PSU
- 410: Ground Extension
- 411: synchronisation circuit
- 412: µC extension
- 413: switched line
- 414: current limiting
- 415: filtering
- 416: OC1
- 417: ground dimmer
- 418: µC dimmer
- 419: SW1
- 420: Rsense1
- 421: Rsense2
- 422: SW2
- 423: ground dimmer
- 423: UDIM
- 424: pre-regulator
- 425: power supply
- 426: dimmer electronics, e.g. µC dimmer
- 427: Neuter
- 428: load

## Claims

1. A load control system (100) for controlling the amount of power delivered to an electrical load (103), the load control system (100) comprising:
- a main load control device (101) configured to be coupled in series between an AC power source and an electrical load (103), the main load control device (101) comprising means for controlling the amount of electrical current flowing from the AC power source through the electrical load (103), the main load control device (101) being adapted to receive external, electrically signaled messages during a first fraction of a half-cycle of a voltage signal provided by the AC power source; and
- one or more remote load control extension devices (102), each of the one or more remote load control extension devices (102) having no more than two external electrical connection terminals including an electrical line terminal (L, 401) and a second terminal, the load control system (100) being **characterized in that**:
- each of the one or more remote load control extension devices (102) comprises a respective single port (Ext_Ctrl) as the second terminal for establishing a communication path (111) and a charging path (112) via a respective single switched electrical wire connection (110) between the main load control device (101) and the respective remote load control extension device (102),
- each of the one or more remote load control extension devices (102) are configured to be coupled in series between the AC power source, through the electrical line terminal (L, 401), and the electrical load (103) via the main load control device (101), through the single switched electrical wire connection (110), each of the one or more remote load control extension devices (102) being remotely installed from the main load control device (101), the one or more remote load control extension devices (102) each comprising means for transmitting the electrically signaled messages along the communication path (111) during the first fraction, and the one or more remote load control extension devices (102) comprising each an internal means for drawing, during a second fraction of a half-cycle of the voltage signal provided by the AC power source, the second fraction being different from the first fraction, an electrical charging current along the charging path (112) that extends through at least the main load control device (101), the electrical charging current being suitable for supplying electrical power to at least the respective means for transmitting the electrically signaled messages, and
- wherein in response to at least one of the electrically signaled messages transmitted by one of the one or more remote load control extension devices (102) and received by the main load control device (101) during the first fraction, the main load control device (101) is configured to adapt the amount of electrical current flowing from the AC power source through the electrical load (103).

2. A load control system (100) according to claim 1, in which the half cycle of the first fraction is a positive half-cycle of the voltage signal provided by the AC power source and the half cycle of the second fraction is a negative half-cycle of the voltage signal provided by the AC power source.

3. A load control system (100) according to claim 1 or 2, in which the means for controlling the amount of electrical current flowing from the AC power source through the electrical load (103) comprise a switch.

4. A load control system (100) according to claim 3, wherein the switch is a bidirectional semiconductor switch, the load control system further comprising a controller circuit that is adapted for switching the bidirectional semiconductor switch and/or a controller circuit comprising a microcontroller.

5. A load control system (100) according to claim 4, further comprising a synchronization circuit that is adapted for accurately timing the switching of the bidirectional semiconductor switch by the controller circuit when the controller circuit is adapted for switching the bidirectional semiconductor switch.

6. A load control system (100) according to any of the previous claims, in which the respective internal means of each of the one or more remote load control extension devices (102) is configured to draw electrical charging current along the charging path (112) through at least the main load control device (101) during both the first and the second fraction, when no electrically signaled messages are transmitted by any of the one or more remote load control extension devices (102).

7. A load control system (100) according to any of the previous claims, in which the main load control device (101) further comprises at least one filter circuit and/or in which the main load control device (101) comprises an isolating electrical element for receiving the electrically signaled messages, and/or wherein the load control system (100) further comprises a user control feedback mechanism and/or actuators for transducing user control inputs into the electrically signaled messages.

8. A load control system (100) according to any of the previous claims, in which the main load control device (101) and/or the one or more remote load control extension devices (102) further comprise a switching means for selecting a mode wherein guaranteed no current is flowing through the load and/or in which the main load control device (101) further comprises a memory element for storing user preferences for the electrical load (103) and/or preset functions of the electrical load (103).

9. Use of a load control system (100) according to any of claims 1 to 8, for controlling the amount of power delivered to an electrical load.

## Patentansprüche

1. Lastregelungssystem (100) zum Regeln der einer elektrischen Last (103) bereitgestellten Leistungsmenge, das Lastregelungssystem (100) umfassend:
- eine Hauptlastregelungsvorrichtung (101), die konfiguriert ist, um in Reihe zwischen einer Wechselstromquelle und einer elektrischen Last (103) gekoppelt zu werden, wobei die Hauptlastregelungsvorrichtung (101) Mittel zum Regeln der Menge an elektrischem Strom umfasst, der von der Wechselstromquelle durch die elektrische Last (103) fließt, wobei die Hauptlastregelungsvorrichtung (101) angepasst ist, um externe, elektrisch signalisierte Nachrichten während eines ersten Teils eines Halbzyklus eines Spannungssignals zu empfangen, das durch die Wechselstromquelle bereitgestellt wird; und
- eine oder mehrere Fernlastregelungserweiterungsvorrichtungen (102), wobei jede der einen oder der mehreren Fernlastregelungserweiterungsvorrichtungen (102) nicht mehr als zwei externe elektrische Netzanschlüsse aufweist, die einen elektrischen Netzanschluss (L, 401) und einen zweiten Anschluss beinhalten,
wobei das Lastregelungssystem (100) **dadurch gekennzeichnet ist, dass:**
- jede der einen oder der mehreren Fernlastregelungserweiterungsvorrichtungen (102) eine jeweilige einzelne Anschlussbuchse (Ext_Ctrl) als den zweiten Anschluss zum Einrichten eines Kommunikationspfads (111) und eines Ladewegs (112) über eine jeweilige einzelne geschaltete elektrische Drahtverbindung (110) zwischen der Hauptlastregelungsvorrichtung (101) und der jeweiligen Fernlastregelungserweiterungsvorrichtung (102) umfasst,
- jede der einen oder der mehreren Fernlastregelungserweiterungsvorrichtungen (102) konfiguriert ist, um in Reihe zwischen der Wechselstromquelle, durch den elektrischen Netzanschluss (L, 401), und der elektrischen Last (103) über die Hauptlastregelungsvorrichtung (101), durch die einzelne geschaltete elektrische Drahtverbindung (110), gekoppelt zu werden, wobei jede der einen oder der mehreren Fernlastregelungserweiterungsvorrichtungen (102) von der Hauptlastregelungsvorrichtung (101) entfernt installiert wird, wobei die eine oder die mehreren Fernlastregelungserweiterungsvorrichtungen (102) jeweils Mittel zum Übertragen der elektrisch signalisierten Nachrichten entlang des Kommunikationspfads (111) während des ersten Teils umfassen, und die eine oder die mehreren Fernlastregelungserweiterungsvorrichtungen (102) umfassend jeweils ein internes Mittel zum Ziehen, während eines zweiten Teils eines Halbzyklus des Spannungssignals, das durch die Wechselstromquelle bereitgestellt wird, wobei sich der zweite Teil von dem ersten Teil unterscheidet, eines elektrischen Ladestroms entlang des Ladewegs (112), der sich durch mindestens die Hauptlastregelungsvorrichtung (101) erstreckt, wobei der elektrische Ladestrom zum Liefern von elektrischer Leistung an mindestens die jeweiligen Mittel zum Übertragen der elektrisch signalisierten Nachrichten geeignet ist, und
- wobei als Reaktion auf mindestens eine der elektrisch signalisierten Nachrichten, die durch eine der einen oder der mehreren Fernlastregelungserweiterungsvorrichtungen (102) übertragen und durch die Hauptlastregelungsvorrichtung (101) während des ersten Teils empfangen werden, die Hauptlastregelungsvorrichtung (101) konfiguriert ist, um die Menge an elektrischem Strom, die von der Wechselstromquelle durch die elektrische Last (103) fließt, anzupassen.

2. Lastregelungssystem (100) nach Anspruch 1, wobei der Halbzyklus des ersten Teils ein positiver Halbzyklus des Spannungssignals ist, das durch die Wechselstromquelle bereitgestellt wird, und der Halbzyklus des zweiten Teils ein negativer Halbzyklus des Spannungssignals ist, das durch die Wechselstromquelle bereitgestellt wird.

3. Lastregelungssystem (100) nach Anspruch 1 oder 2, wobei die Mittel zum Regeln der Menge an elektrischem Strom, der von der Wechselstromquelle durch die elektrische Last (103) fließt, einen Schalter umfassen.

4. Lastregelungssystem (100) nach Anspruch 3, wobei der Schalter ein bidirektionaler Halbleiterschalter ist, das Lastregelungssystem ferner umfassend eine Steuerschaltung, die zum Schalten des bidirektionalen Halbleiterschalters angepasst ist, und/oder eine Steuerschaltung, umfassend einen Mikrocontroller.

5. Lastregelungssystem (100) nach Anspruch 4, ferner umfassend eine Synchronisationsschaltung, die zum genauen Synchronisieren des Schaltens des bidirektionalen Halbleiterschalters durch die Steuerschaltung geeignet ist, wenn die Steuerschaltung zum Schalten des bidirektionalen Halbleiterschalters angepasst ist.

6. Lastregelungssystem (100) nach einem der vorstehenden Ansprüche, wobei das jeweilige interne Mittel jeder der einen oder der mehreren Fernlastregelungserweiterungsvorrichtungen (102) konfiguriert ist, um elektrischen Ladestrom entlang des Ladewegs (112), durch mindestens die Hauptlastregelungsvorrichtung (101), während sowohl des ersten als auch des zweiten Teils zu ziehen, wenn keine elektrisch signalisierten Nachrichten durch eine beliebige der einen oder der mehreren Fernlastregelungserweiterungsvorrichtungen (102) übertragen werden.

7. Lastregelungssystem (100) nach einem der vorstehenden Ansprüche, wobei die Hauptlastregelungsvorrichtung (101) ferner mindestens eine Filterschaltung umfasst und/oder wobei die Hauptlastregelungsvorrichtung (101) ein elektrisches Isolierelement zum Empfangen der elektrisch signalisierten Nachrichten umfasst, und/oder wobei das Lastregelungssystem (100) ferner einen Benutzerregelungsrückkopplungsmechanismus und/oder Aktuatoren zum Umwandeln von Benutzerregelungseingaben in die elektrisch signalisierten Nachrichten umfasst.

8. Lastregelungssystem (100) nach einem der vorstehenden Ansprüche, wobei die Hauptlastregelungsvorrichtung (101) und/oder die eine oder die mehreren Fernlastregelungserweiterungsvorrichtungen (102) ferner ein Schaltmittel zum Auswählen eines Modus umfassen, wobei garantiert wird, dass kein Strom durch die Last fließt und/oder wobei die Hauptlastregelungsvorrichtung (101) ferner ein Speicherelement zum Speichern von Benutzerpräferenzen für die elektrische Last (103) und/oder voreingestellte Funktionen der elektrischen Last (103) umfasst.

9. Verwendung eines Lastregelungssystems (100) nach einem der Ansprüche 1 bis 8 zum Regeln der einer elektrischen Last bereitgestellten Leistungsmenge.

## Revendications

1. Système de commande de charge (100) destiné à la commande de la quantité d'énergie distribuée à une charge électrique (103), le système de commande de charge (100) comprenant :
- un dispositif de commande de charge principal (101) configuré pour être couplé en série entre un source d'alimentation CA et une charge électrique (103), le dispositif de commande de charge principal (101) comprenant un moyen pour commander la quantité de courant électrique circulant depuis la source d'alimentation CA à travers la charge électrique (103), le dispositif de commande de charge principal (101) étant adapté pour recevoir des messages externes à signalisation électrique pendant une première fraction d'un demi-cycle d'un signal de tension fourni par la source d'alimentation CA ; et
- un ou plusieurs dispositifs d'extension de commande de charge à distance (102), chacun du ou des dispositifs d'extension de commande de charge à distance (102) n' ayant pas plus de deux bornes de connexion électrique externes comportant une borne de ligne électrique (L, 401) et une seconde borne,
le système de commande de charge (100) étant **caractérisé en ce que** :
- chacun du ou des dispositifs d'extension de commande de charge à distance (102) comprend un port unique respectif (Ext_Ctrl) comme second terminal pour établir une voie de communication (111) et une voie de charge (112) par l'intermédiaire d'une connexion de fil électrique commutée unique respective (110) entre le dispositif de commande de charge principal (101) et le dispositif d'extension de commande de charge à distance respectif (102),
- chacun du ou des dispositifs d'extension de commande de charge à distance (102) est configuré pour être couplé en série entre la source d'alimentation CA, par la borne de ligne électrique (L, 401), et la charge électrique (103) par l'intermédiaire du dispositif de commande de charge principal (101), par le biais de la connexion de fil électrique commutée unique (110), chacun du ou des dispositifs d'extension de commande de charge à distance (102) étant installé à distance depuis le dispositif de commande de charge principal (101), le ou les dispositifs d'extension de commande de charge à distance (102) comprenant chacun un moyen pour transmettre les messages à signalisation électrique le long du trajet de communication (111) pendant la première fraction, et le ou les dispositifs d'extension de commande de charge à distance (102) comprenant chacun un moyen interne pour tirer, pendant une seconde fraction d'un demi-cycle du signal de tension fourni par la source d'alimentation CA, la seconde fraction étant différente de la première fraction, un courant de charge électrique le long du trajet de charge (112) qui s'étend à travers au moins le dispositif de commande de charge principal (101), le courant de charge électrique étant adapté pour approvisionner de l'énergie électrique à au moins le moyen respectif pour transmettre les messages à signalisation électrique, et
- en réponse à au moins l'un des messages à signalisation électrique transmis par l'un du ou des dispositifs d'extension de commande de charge à distance (102) et reçus par le dispositif de commande de charge principal (101) pendant la première fraction, le dispositif de commande de charge principal (101) étant configuré pour adapter la quantité de courant électrique circulant de la source d'alimentation CA à travers la charge électrique (103).

2. Système de commande de charge (100) selon la revendication 1, dans lequel le demi-cycle de la première fraction est un demi-cycle positif du signal de tension fourni par la source d'alimentation CA et le demi-cycle de la seconde fraction est un demi-cycle négatif du signal de tension fourni par la source d'alimentation CA.

3. Système de commande de charge (100) selon la revendication 1 ou 2, dans lequel le moyen de commande de la quantité de courant électrique circulant de la source d'alimentation CA à travers la charge électrique (103) comprend un commutateur.

4. Système de commande de charge (100) selon la revendication 3, le commutateur étant un commutateur bidirectionnel à semi-conducteur, le système de commande de charge comprenant en outre un circuit de commande qui est adapté pour commuter le commutateur bidirectionnel à semi-conducteur et/ou un circuit de commande comprenant un micro-dispositif de commande.

5. Système de commande de charge (100) selon la revendication 4, comprenant en outre un circuit de synchronisation qui est adapté pour chronométrer avec précision la commutation du commutateur bidirectionnel à semi-conducteur par le circuit de commande lorsque le circuit de commande est adapté pour commuter le commutateur bidirectionnel à semi-conducteur.

6. Système de commande de charge (100) selon l'une quelconque des revendications précédentes, dans lequel le moyen interne respectif de chacun du ou des dispositifs d'extension de commande de charge à distance (102) est configuré pour tirer un courant de charge électrique le long du trajet de charge (112) à travers au moins le dispositif de commande de charge principal (101) pendant à la fois la première et la seconde fraction, lorsqu'aucun message à signalisation électrique n'est transmis par l'un quelconque du ou des dispositifs d'extension de commande de charge à distance (102).

7. Système de commande de charge (100) selon l'une quelconque des revendications précédentes, dans lequel le dispositif de commande de charge principal (101) comprend en outre au moins un circuit de filtre et/ou dans lequel le dispositif de commande de charge principal (101) comprend un élément électrique d'isolation pour recevoir les messages à signalisation électrique, et/ou le système de commande de charge (100) comprenant en outre un mécanisme de rétroaction de commande d'utilisateur et/ou des actionneurs pour transduire des entrées de commande d'utilisateur dans les messages à signalisation électrique.

8. Système de commande de charge (100) selon l'une quelconque des revendications précédentes, dans lequel le dispositif de commande de charge principal (101) et/ou le ou les dispositifs d'extension de commande de charge à distance (102) comprennent en outre un moyen de commutation pour sélectionner un mode, garantissant qu'aucun courant ne circule à travers la charge et/ou dans lequel le dispositif de commande de charge principal (101) comprend en outre un élément de mémoire pour stocker les préférences de l'utilisateur pour la charge électrique (103) et/ou les fonctions prédéfinies de la charge électrique (103).

9. Utilisation d'un système de commande de charge (100) selon l'une quelconque des revendications 1 à 8, pour commander la quantité d'énergie distribuée à une charge électrique.
